# EUROPÄISCHE PATENTANMELDUNG

(11) **EP 2 025 498 A2**
(43) Veröffentlichungstag der Anmeldung: **18.02.2009**
(21) Anmeldenummer: 08159575.3
(22) Anmeldetag: 03.07.2008
(51) Int. Cl.: B29C 65/16, B29C 65/14, B44C 1/10, B29C 63/02

(54) **Verfahren zur Dekorierung von Oberflächen**

(30) Priorität: 16.08.2007 DE 102007038578
(71) Anmelder: Evonik Degussa GmbH, 45128 Essen (DE)
(72) Erfinder: Göring, Rainer, 46325 Borken (DE); Wielpütz, Martin, Dr., 55128 Mainz (DE); Baumann, Franz-Erich, Dr., 48249 Dülmen (DE); Kuhmann, Karl, 48249 Dülmen (DE); Monsheimer, Sylvia, 45721 Haltern am See (DE)

(57) **Zusammenfassung**

Mit einem Verfahren zur Herstellung eines oberflächendekorierten Formteils, wobei
a) ein Formteil bereitgestellt wird und
b) mindestens eine Portion der Formteiloberfläche mit einer dekorierenden Folie unter Einstrahlung von elektromagnetischer Strahlung verschweißt wird,
wird die Oberfläche eines in einem ersten Schritt beispielsweise mittels Rapid Prototyping erzeugten Formteils nachträglich dekoriert.

## Beschreibung

Gegenstand der Erfindung ist ein Verfahren zum Dekorieren von Oberflächen, bei dem eine ein- oder mehrschichtige Folie mit Hilfe von elektromagnetischer Strahlung aufgebracht wird.

Kunststoffformteile können mit den unterschiedlichsten Kunststoffschweißverfahren miteinander verbunden werden, beispielweise durch Hochfrequenzschweißen, Wärmeimpulsschweißen, Wärmekontaktschweißen, Heizkeilschweißen oder mit Hilfe elektromagnetischer Strahlung wie Laserlicht, IR oder Mikrowellenstrahlung. Beim Laserdurchstrahlschweißen wird üblicherweise ein lasertransparentes Fügeteil und ein laserabsorbierender Fügepartner verwendet. Die Laserstrahlung durchdringt den transmittierenden Körper und trifft auf den anliegenden absorbierenden Formkörper, der durch die lokale Erhitzung aufschmilzt. Allerdings sollte der Laserstrahl, der durch das transmittierende Fügeteil dringt, beim Fügen nicht allzu tief in den absorbierenden Fügepartner eindringen, sondern bereits in den Bereichen der Oberfläche zu einem Aufschmelzen des absorbierenden Formteils führen. Hierbei kommt es zu einer günstigen, lokalen Umsetzung des Laserstrahls innerhalb der Fügezone in Wärme. Die sich ausdehnende Schmelze berührt den transmittierenden Fügepartner und schmilzt diesen ebenfalls lokal auf. Anpressdruck unterstützt dabei das Zustandekommen der Fügeverbindung. Die Wärme wird gezielt eingebracht und kann nicht vorzeitig nach außen entweichen. Thermoplaste im ungefüllten Zustand sind für das Laserlicht bei Wellenlängen, die normalerweise zum Laserdurchstrahlschweißen verwendet werden, weitestgehend transparent. Ein Vorteil gegenüber den anderen Schweißverfahren ist das sehr gute optische Aussehen der Verbindung und die lokal begrenzte Erwärmung der Fügezone. Ähnliches gilt für das Schweißen mittels IR-Strahlung oder anderer elektromagnetischer Strahlung.

Es ist bereits bekannt, dass Formteile und Folien mittels elektromagnetischer Strahlung, beispielsweise Laserstrahlung, miteinander verschweißt werden können (DE 195 42 328 A1; DE 199 16 786 A1; WO 02/055287). Hierbei werden konstruktive Verbunde erhalten. Verfahren, um auf diese Weise eine Oberfläche zu dekorieren, sind bislang nicht bekannt.

Das Dekorieren einer Oberfläche kann verschiedenen Zwecken dienen:
a) Die Oberfläche eines Formteils, das durch Rapid Prototyping bzw. Rapid Manufacturing hergestellt wurde, ist oftmals rau und ästhetisch wenig ansprechend.
b) Gleiches gilt für ein Formteil, das aus einer mit Fasern oder Füllstoffen verstärkten Formmasse hergestellt wurde.
c) Häufig besteht das Bedürfnis, auf Formteile Embleme, farbige Dekorelemente, Etiketten oder Kennzeichnungen aufzubringen.
d) Darüber hinaus möchte man eine Oberfläche, die unter Anwendungsbedingungen nicht ausreichend kratzfest, verwitterungsbeständig, chemikalienbeständig oder spannungsrissbeständig ist, gerne so schützen, dass sie keine Gebrauchsspuren entwickelt und z. B. ihren Glanz behält.

Aus der EP 0 568 988 A1 ist bekannt, dass oberflächenresistente Bauteile durch Hinterspritzen einer Folie, die eine Schutzschicht darstellt, mit einer Thermoplastschmelze hergestellt werden können. Die Folie wird hierbei bereits bei der Herstellung des Formteils mit diesem verbunden. Dieses Verfahren eignet sich nicht für Formteile, die durch Rapid Prototyping bzw. Rapid Manufacturing hergestellt werden.

Es bestand daher die Aufgabe, eine Möglichkeit zu entwickeln, um bei einem in einem ersten Schritt erzeugten Formteil nachträglich die Oberfläche zu dekorieren, um beispielsweise Formteile dekorieren zu können, die mittels Spritzgießen nicht hergestellt werden können, oder um wechselnde Dekorelemente aufbringen zu können bzw. um Kleinserien herzustellen.

Diese Aufgabe wird gelöst durch ein Verfahren zur Herstellung eines oberflächendekorierten Formteils, wobei
a) ein Formteil bereitgestellt wird und
b) mindestens eine Portion der Formteiloberfläche mit einer dekorierenden Folie unter Einstrahlen von elektromagnetischer Strahlung verschweißt wird.

In einer möglichen Ausführungsform wird das Formteil durch Rapid Prototyping oder Rapid Manufacturing hergestellt. Hier wird eine Folie aufgeschweißt, um das Teil mit einer glatten Oberfläche zu versehen. Darüber hinaus kann die Folie weitere dekorative Funktionen erfüllen. Mit den Begriffen "Rapid Prototyping" und "Rapid Manufacturing" sind schichtweise arbeitende werkzeuglose Verfahren (also Verfahren ohne vorgefertigte Form) gemeint, bei denen selektiv Bereiche der jeweiligen pulverförmigen Schicht aufgeschmolzen und nach Abkühlen verfestigt werden. Beispiele hierfür sind das selektive Lasersintern (US 6 136 948; WO 96/06881), das SIV-Verfahren, wie es in WO 01/38061 beschrieben wird, oder ein Verfahren, wie es aus der EP-A-1 015 214 hervorgeht. Die beiden letzteren Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in der DE-A-103 11 438 beschrieben; hier wird die zum Verschmelzen benötigte Energie durch einen Mikrowellengenerator eingebracht und die Selektivität wird durch Auftragen eines Suszeptors erreicht. Weitere geeignete Verfahren sind solche, die mit einem Absorber arbeiten, der entweder im Pulver enthalten ist oder der per Inkjet-Verfahren aufgetragen wird wie in den deutschen Patentanmeldungen DE 10 2004 012 682.8, DE 10 2004 012 683.6 und DE 10 2004 020 452.7 beschrieben. Dabei kann zur Einwirkung der elektromagnetischen Energie eine große Bandbreite an Lasern verwendet werden, aber auch eine flächige Einwirkung der elektromagnetischen Energie ist geeignet.

Das für diese Verfahren eingesetzte Pulver kann durch Vermahlen der Formmasse, bevorzugt bei tiefen Temperaturen, hergestellt werden. Das Mahlgut kann anschließend fraktioniert werden, um grobe Partikel oder sehr feine Partikel zu entfernen. Auch eine mechanische Nachbehandlung, z. B. in einem schnelllaufenden Mischer zur Verrundung der Partikel, kann angeschlossen werden. Es empfiehlt sich, das so erhaltene Pulver nach dem Stand der Technik mit einer Rieselhilfe auszurüsten, beispielsweise mit pyrogener Kieselsäure, die im Dry Blend untergemischt wird. Vorzugsweise weist das so erhaltene Pulver einen zahlenmittleren Korndurchmesser zwischen 40 und 120 µm und eine BET-Oberfläche von kleiner als 10 m²/g auf.

In einer weiteren möglichen Ausführungsform besteht das Formteil aus einer mit Fasern und/oder Füllstoffen verstärkten Formmasse. Geeignete Fasern und Füllstoffe sowie geeignete Zusammensetzungen sind weiter unten angegeben. Insbesondere bei höheren Füllgraden drücken sich die Füll- und Verstärkungsstoffe an der Oberfläche nach außen ab, was eine raue Oberfläche ergibt. Abgesehen hiervon kann eine derartige Oberfläche, gerade bei nicht optimaler Anbindung der Füll- und Verstärkungsstoffe, verwittern bzw. auskreiden. Durch das erfindungsgemäße Verfahren wird dies verhindert.

In einer weiteren möglichen Ausführungsform wird auf ein Formteil jeglicher Art eine Folie aufgebracht, die Embleme, farbige Dekorelemente oder Kennzeichnungen enthält oder ein Etikett darstellt. Das Formteil kann durch Extrudieren, Spritzgießen oder jedes andere Formgebungsverfahren hergestellt worden sein.

Schließlich wird in einer weiteren möglichen Ausführungsform eine Folie auf eine Oberfläche aufgebracht, die unter Anwendungsbedingungen Gebrauchsspuren entwickeln würde, da sie beispielsweise nicht ausreichend kratzfest, verwitterungsbeständig, chemikalienbeständig oder spannungsrissbeständig ist. Geeignete Folienmaterialien sind bekannt; Beispiele werden weiter unten angegeben.

Die erfindungsgemäß eingesetzten Formteile sind üblicherweise aus thermoplastischen Polymeren aufgebaut, können aber auch aus Keramik, Naturstoffen wie Holz oder Leder, Duroplasten oder Metall gebildet werden. Sie können auch mehrkomponentig, z. B. mehrschichtig, aufgebaut sein.

Als thermoplastische Polymere kommen alle dem Fachmann bekannten Thermoplaste in Betracht. Geeignete thermoplastische Polymere werden beispielsweise im Kunststoff-Taschenbuch, Hrsg. Saechtling, 25. Ausgabe, Hanser-Verlag, München, 1992, insbesondere Kapitel 4 sowie darin zitierte Verweise, und im Kunststoff-Handbuch, Hrsg. G. Becker und D. Braun, Bände 1 bis 11, Hanser-Verlag, München, 1966 bis 1996, beschrieben.

Exemplarisch seien als geeignete Thermoplaste genannt: Polyoxyalkylene, Polycarbonate (PC), Polyester wie Polybutylenterephthalat (PBT) oder Polyethylenterephthalat (PET), Polyolefine wie Polyethylen oder Polypropylen, Poly(meth)acrylate, Polyamide, vinylaromatische (Co)polymere wie Polystyrol, schlagzäh modifiziertes Polystyrol wie HI-PS, oder ASA-, ABS- oder AES-Polymerisate, Polyarylenether wie Polyphenylenether (PPE), Polysulfone, Polyurethane, Polylactide, halogenhaltige Polymerisate, imidgruppenhaltige Polymere, Celluloseester, Siliconpolymere und thermoplastische Elastomere. Es können auch Mischungen unterschiedlicher Thermoplaste als Materialien für die Kunststoffformteile eingesetzt werden. Bei diesen Mischungen kann es sich um ein- oder mehrphasige Polymerblends handeln.

Polyoxyalkylenhomo- oder -copolymerisate, insbesondere (Co)polyoxymethylene (POM), und Verfahren zu deren Herstellung sind dem Fachmann an sich bekannt und in der Literatur beschrieben. Geeignete Materialien sind im Handel beispielsweise unter der Markenbezeichnung Ultraform^{®} (BASF AG) erhältlich. Ganz allgemein weisen diese Polymere mindestens 50 Mol-% an wiederkehrenden Einheiten -CH₂O- in der Polymerhauptkette auf. Die Homopolymeren werden im allgemeinen durch Polymerisation von Formaldehyd oder Trioxan hergestellt, vorzugsweise in Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150 °C und Molekulargewichte (Gewichtsmittelwert) M_{w} im Bereich von 5.000 bis 200.000, vorzugsweise von 7.000 bis 150.000 g/mol. Endgruppenstabilisierte Polyoxymethylenpolymerisate, die an den Kettenenden C-C-Bindungen aufweisen, werden besonders bevorzugt.

Geeignete Polycarbonate sind an sich bekannt und sind z. B. gemäss DE-B-13 00 266 durch Grenzflächenpolykondensation oder gemäss DE-A-14 95 730 durch Umsetzung von Biphenylcarbonat mit Bisphenolen erhältlich. Bevorzugtes Bisphenol ist 2,2-Di(4-hydroxyphenyl)propan, im allgemeinen als Bisphenol A bezeichnet. Geeignete Polycarbonate sind im Handel beispielsweise unter der Markenbezeichnung Lexan^{®} (GE Plastics B. V., Holland) erhältlich.

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z. B. durch Halogen wie Chlor oder Brom oder durch C₁-C₄-Alkylgruppen wie Methyl-, Ethyl-, i- bzw. n-Propyl- oder n-, i- bzw. tert.-Butylgruppen. Die Polyester können durch Umsetzung von aromatischen Dicarbonsäuren, deren Estern oder anderer esterbildender Derivate hiervon mit aliphatischen Dihydroxyverbindungen in an sich bekannter Weise hergestellt werden. Als bevorzugte Dicarbonsäuren sind Naphthalindicarbonsäure, Terephthalsäure und Isophthalsäure oder deren Mischungen zu nennen. Bis zu 30 Mol-% der aromatischen Dicarbonsäuren können durch aliphatische oder cycloaliphatische Dicarbonsäuren wie Adipinsäure, Azelainsäure, Sebacinsäure, Dodecandisäure und Cyclohexandicarbonsäure ersetzt werden. Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandimethylol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat (PET), Polyethylennaphthalat, Polybutylennaphthalat und Polybutylenterephthalat (PBT) bevorzugt.

Geeignete Polyolefine sind in erster Linie Polyethylen und Polypropylen sowie Copolymerisate auf der Basis von Ethylen oder Propylen, ggf. auch mit höheren α-Olefinen. Unter Polyolefinen sollen auch Ethylen-Propylen-Elastomere und Ethylen-Propylen-Terpolymere verstanden werden.

Unter den Poly(meth)acrylaten sind insbesondere Polymethylmethacrylat (PMMA) sowie Copolymere auf der Basis von Methylmethacrylat mit bis zu 40 Gew.-% weiterer copolymerisierbarer Monomerer, wie n-Butylacrylat, t-Butylacrylat oder 2-Ethylhexylacrylat, zu nennen, wie sie beispielsweise unter den Bezeichnungen Lucryl^{®} (BASF AG) oder Plexiglas^{®} (Röhm GmbH) erhältlich sind. Im Sinne der Erfindung sind hierunter auch schlagzähmodifizierte Poly(meth)acrylate sowie Mischungen aus Poly(meth)acrylaten und SAN-Polymerisaten, die mit Polyacrylatkautschuken schlagzähmodifiziert sind (z. B. das Handelsprodukt Terlux^{®} der BASF AG), zu verstehen.

Unter Polyamiden im Sinne der vorliegenden Erfindung sollen alle bekannten Polyamide, einschließlich Polyetheramiden und Polyetherblockamiden, sowie deren Blends verstanden werden. Beispiele hierfür sind Polyamide, die sich von Lactamen mit 7 bis 13 Ringgliedern ableiten, wie Polycaprolactam, Polycapryllactam und Polylaurinlactam, sowie Polyamide, die durch Umsetzung von Dicarbonsäuren mit Diaminen erhalten werden. Die Polyamide können auch vollaromatisch oder teilaromatisch sein; letztere werden üblicherweise als PPA bezeichnet.

Als Dicarbonsäuren sind Alkandicarbonsäuren mit 6 bis 22, insbesondere 6 bis 12 Kohlenstoffatomen und aromatische Dicarbonsäuren einsetzbar. Hier seien Adipinsäure, Azelainsäure, Sebacinsäure, Dodecandisäure (= Decandicarbonsäure) und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)methan, 2,2-Di-(4-aminophenyl)-propan oder 2,2-Di-(4-aminocyclohexyl)propan.

Bevorzugte Polyamide sind Polyhexamethylenadipinsäureamid (PA 66), Polyhexamethylensebacinsäureamid (PA 610), Polyhexamethylendecandicarbonsäureamid (PA 612), Polycaprolactam (PA 6), Copolyamide 6/66, insbesondere mit einem Anteil von 5 bis 95 Gew.-% an Caprolactam-Einheiten sowie Polylaurinlactam (PA 12) und PA 11, darüber hinaus auch Copolyamide auf Basis von Caprolactam, Terephthalsäure und Hexamethylendiamin oder auf Basis von Terephthalsäure, Adipinsäure und Hexamethylendiamin.

Außerdem seien auch noch Polyamide erwähnt, die z. B. durch Kondensation von 1,4-Diaminobutan mit Adipinsäure unter erhöhter Temperatur erhältlich sind (PA 46). Herstellungsverfahren für Polyamide dieser Struktur sind z. B. in EP-A 0 038 094, EP-A 0 038 582 und EP-A 0 039 524 beschrieben.

Weitere Beispiele sind Polyamide, die durch Copolymerisation zweier oder mehrerer der vorgenannten Monomeren erhältlich sind, oder Mischungen mehrerer Polyamide, wobei das Mischungsverhältnis beliebig ist.
Die nachfolgende nicht abschließende Aufstellung enthält die genannten sowie weitere Polyamide im Sinne der Erfindung (in Klammern sind die Monomeren angegeben): PA46 (Tetramethylendiamin, Adipinsäure), PA66 (Hexamethylendiamin, Adipinsäure), PA69 (Hexamethylendiamin, Azelainsäure), PA610 (Hexamethylendiamin, Sebacinsäure), PA612 (Hexamethylendiamin, Decandicarbonsäure), PA613 (Hexamethylendiamin, Undecandicarbonsäure), PA614 (Hexamethylendiamin, Dodecandicarbonsäure), PA1212 (1,12-Dodecandiamin, Decandicarbonsäure), PA1313 (1,13-Diaminotridecan, Undecandicarbonsäure), PA MXD6 (m-Xylylendiamin, Adipinsäure), PA TMDT (Trimethylhexamethylendiamin, Terephthalsäure), PA 4 (Pyrrolidon), PA 6 (ε-Caprolactam), PA 7 (Ethanolactam), PA 8 (Capryllactam), PA 9 (9-Aminopelargonsäure), PA 11 (11-Aminoundecansäure), PA 12 (Laurinlactam). Diese Polyamide und ihre Herstellung sind bekannt. Einzelheiten zu ihrer Herstellung findet der Fachmann in Ullmanns Encyklopädie der Technischen Chemie, 4. Auflage, Bd. 19, S. 39-54, Verlag Chemie, Weinheim 1980, sowie Ullmanns Encyclopedia of Industrial Chemistry, Vol. A21, S. 179-206, VCH Verlag, Weinheim 1992, sowie Stoeckhert, Kunststofflexikon, 8. Auflage, S. 425-428, Hanser Verlag München 1992 (Stichwort "Polyamide" und folgende).

Weitere geeignete thermoplastische Materialien stellen vinylaromatische (Co)polymere dar. Das Molekulargewicht dieser an sich bekannten und im Handel erhältlichen Polymeren liegt im allgemeinen im Bereich von 1.500 bis 2.000.000, vorzugsweise im Bereich von 70.000 bis 1.000.000 g/mol.

Nur stellvertretend seien hier vinylaromatische (Co)polymere aus Styrol, Chlorstyrol, α-Methylstyrol und p-Methylstyrol genannt; in untergeordneten Anteilen (vorzugsweise nicht mehr als 30, insbesondere nicht mehr als 8 Gew.-%) können auch Comonomere wie (Meth)acrylnitril oder(Meth)acrylsäureester am Aufbau beteiligt sein. Besonders bevorzugte vinylaromatische (Co)polymere sind Polystyrol, Styrol-Acrylnitril-Copolymere (SAN) und schlagzäh modifiziertes Polystyrol (HIPS = High Impact Polystyrene). Es versteht sich, dass auch Mischungen dieser Polymeren eingesetzt werden können. Die Herstellung kann nach dem in der EP-A-0 302 485 beschriebenen Verfahren erfolgen. Weiterhin sind ASA-, ABS- und AES-Polymerisate (ASA = Acrylnitril-Styrol-Acrylester, ABS = Acrylnitril-Butadien-Styrol, AES = Acrylnitril-EPDM-Kautschuk-Styrol) besonders bevorzugt. Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im allgemeinen auf ein Styrol/Acrylnitril-Polymerisat (SAN) zurückgegriffen. Bevorzugt werden Pfropfpolymerisate verwendet, die als Kautschuk einen Dienkautschuk auf Basis von Dienen wie z. B. Butadien oder Isopren (ABS), einen Alkylacrylatkautschuk auf Basis von Alkylestern der Acrylsäure wie n-Butylacrylat und 2-Ethylhexylacrylat, einen EPDM-Kautschuk auf Basis von Ethylen, Propylen und einem Dien oder Mischungen dieser Kautschuke bzw. Kautschukmonomeren enthalten.

Die Herstellung von geeigneten ABS-Polymerisaten ist z. B. in DE-A 100 26 858 oder in DE-A 197 28 629 eingehend beschrieben. Für die Herstellung von ASA-Polymerisaten kann z. B. auf die EP-A 0 099 532 zurückgegriffen werden. Angaben über die Herstellung von AES-Polymerisaten sind beispielsweise in der US 3,055,859 oder in der US 4,224,419 offenbart.
Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Biphenylen, Terphenylen, 1,5-Naphthylen, 1,6-Naphthylen, 1,5-Anthrylen, 9,10-Anthrylen oder 2,6-Anthrylen. Hiervon werden 1,4-Phenylen und 4,4'-Biphenylen bevorzugt. Vorzugsweise sind diese aromatischen Reste nicht substituiert. Sie können jedoch einen oder mehrere Substituenten tragen. Geeignete Polyphenylenether sind unter der Bezeichnung Noryl^{®} (GE Plastics B. V., Holland) kommerziell erhältlich.

Die Polyarylenether sind an sich bekannt oder können nach an sich bekannten Methoden hergestellt werden.

Bevorzugte Verfahrensbedingungen zur Synthese von Polyarylenethersulfonen oder -ketonen sind beispielsweise in der EP-A 0 113 112 und der EP-A 0 135 130 beschrieben. Geeignete Polyphenylenethersulfone sind z. B. unter der Bezeichnung Ultrason^{®} E (BASF AG), geeignete Polyphenylenetherketone unter der Bezeichnung VESTAKEEP^{®} (Degussa GmbH) im Handel erhältlich.

Des weiteren sind Polyurethane, Polyisocyanurate und Polyharnstoffe geeignete Materialien für die Herstellung der Kunststoffformteile. Weiche, halbharte oder harte, thermoplastische oder vernetzte Polyisocyanat-Polyadditionsprodukte, beispielsweise Polyurethane, Polyisocyanurate und/oder Polyharnstoffe, sind allgemein bekannt. Ihre Herstellung ist vielfältig beschrieben und erfolgt üblicherweise durch Umsetzung von Isocyanaten mit gegenüber Isocyanaten reaktiven Verbindungen bei allgemein bekannten Bedingungen. Bevorzugt wird die Umsetzung in Gegenwart von Katalysatoren und/oder Hilfsstoffen durchgeführt.

Als Isocyanate kommen die an sich bekannten aromatischen, arylaliphatischen, aliphatischen und/oder cycloaliphatischen organischen Isocyanate, bevorzugt Diisocyanate, in Frage.

Als gegenüber Isocyanaten reaktive Verbindungen können beispielsweise allgemein bekannte Verbindungen mit einem Molekulargewicht von 60 bis 10.000 g/mol und einer Funktionalität gegenüber Isocyanaten von 1 bis 8, bevorzugt 2 bis 6 eingesetzt werden (im Falle von thermoplastischen Polyurethanen Funktionalität ca. 2), beispielsweise Polyole wie Polyetherpolyole, Polyesterpolyole und Polyetherpolyesterpolyole mit einem Molekulargewicht von 500 bis 10.000 g/mol und/oder Diole, Triole und/oder Polyole mit Molekulargewichten kleiner als 500 g/mol.

Polylactide, also Polymere der Milchsäure, sind an sich bekannt und können nach an sich bekannten Verfahren hergestellt werden.

Neben Polylactid können auch Co-oder Blockcopolymere auf der Basis von Milchsäure und weiteren Monomeren verwendet werden. Meist werden lineare Polylactide eingesetzt. Es können aber auch verzweigte Milchsäurepolymerisate verwendet werden. Als Verzweiger können z. B. mehrfunktionelle Säuren oder Alkohole dienen.
Als geeignete halogenhaltige Polymerisate sind beispielsweise Polymerisate des Vinylchlorids zu nennen, insbesondere Polyvinylchlorid (PVC) wie Hart-PVC und Weich-PVC und Copolymerisate des Vinylchlorids wie PVC-U-Formmassen. Weiterhin kommen fluorhaltige Polymere in Betracht, insbesondere Polytetrafluorethylen (PTFE), Tetrafluorethylen-Perfluorpropylen-Copolymere (FEP), Copolymere des Tetrafluorethylens mit Perfluoralkylvinylether, Ethylen-Tetrafluorethylen-Copolymere (ETFE), Polyvinylidenfluorid (PVDF), Polyvinylfluorid (PVF), Polychlortrifluorethylen (PCTFE) und Ethylen-Chlortrifluorethylen-Copolymere (ECTFE).

Imidgruppenhaltige Polymere sind insbesondere Polyimide, Polyetherimide und Polyamidimide.

Geeignete Celluloseester sind etwa Celluloseacetat, Celluloseacetobutyrat und Cellulosepropionat.

Daneben kommen auch Siliconpolymere als Thermoplaste in Betracht. Geeignet sind insbesondere Siliconkautschuke. Dabei handelt es sich üblicherweise um Polyorganosiloxane, die zu Vernetzungsreaktionen fähige Gruppen aufweisen. Derartige Polymere werden beispielsweise in Römpp Chemie Lexikon, CD-ROM-Version 1.0, Thieme Verlag Stuttgart 1995, beschrieben.

Schließlich kann auch die Verbindungsklasse der thermoplastischen Elastomere (TPE) verwendet werden. TPE lassen sich wie Thermoplaste verarbeiten, haben jedoch kautschukelastische Eigenschaften. Geeignet sind TPE-Blockcopolymere, TPE-Pfropfcopolymere und segmentierte TPE-Copolymere aus zwei oder mehr Monomerbausteinen. Besonders geeignete TPE sind thermoplastische Polyurethan-Elastomere (TPE-U oder TPU), Styrol-Oligoblock-Copolymere (TPE-S) wie SBS (Styrol-Butadien-Styrol-Blockcopolymer) und SEBS (Styrol-Ethylen-Butylen-Styrol-Blockcopolymer, erhältlich durch Hydrieren von SBS), thermoplastische Polyolefin-Elastomere (TPE-O), thermoplastische Polyester-Elastomere (TPE-E), thermoplastische Polyamid-Elastomere (TPE-A) und insbesondere thermoplastische Vulkanisate (TPE-V). Einzelheiten zu TPE findet der Fachmann in G. Holden et al., Thermoplastic Elastomers, 2. Auflage, Hanser Verlag, München 1996.
Die Formteile können darüber hinaus übliche Zusatzstoffe und Verarbeitungshilfsmittel enthalten. Geeignete Zusatzstoffe und Verarbeitungshilfsmittel sind z. B. Gleit- oder Entformungsmittel, Kautschuke, Antioxidantien, Stabilisatoren gegen Lichteinwirkung, Antistatika, Flammschutzmittel oder faser- bzw. pulverförmige Füll- oder Verstärkungsmittel sowie andere Zusatzstoffe oder deren Mischungen.

Geeignete Gleit- und Entformungsmittel sind z. B. Stearinsäure, Stearylalkohol, Stearinsäureester oder -amide, Siliconöle, Metallstearate, Montanwachse und Wachse auf Basis von Polyethylen und Polypropylen.

Geeignete Antioxidantien (Wärmestabilisatoren) sind etwa sterisch gehinderte Phenole, Hydrochinone, Arylamine, Phosphite, verschiedene substituierte Vertreter dieser Gruppe sowie deren Mischungen.

Geeignete Stabilisatoren gegen Lichteinwirkung sind z. B. verschiedene substituierte Resorcine, Salicylate, Benzotriazole, Benzophenone und HALS (Hindered Amine Light Stabilizers).

Geeignete Antistatika sind beispielsweise Aminderivate wie N,N-Bis(hydroxyalkyl)alkylamine oder -alkylenamine, Polyethylenglycolester oder Glycerinmono- und -distearate sowie deren Mischungen.

Geeignete Flammschutzmittel sind z. B. die dem Fachmann bekannten halogenhaltigen Verbindungen, allein oder zusammen mit Antimontrioxid, oder phosphorhaltige Verbindungen, Magnesiumhydroxid, roter Phosphor sowie andere gebräuchliche Verbindungen oder deren Mischungen. Darunter fallen z. B. die in der DE-A 196 32 675 oder die in der Encyclopedia of Chemical Technology, Hrsg. R. Kirk und D. Othmer, Vol. 10, 3. Aufl., Wiley, New York, 1980, Seiten 340 bis 420, offenbarten Phosphorverbindungen wie Phosphate, z. B. Triarylphosphate wie Trikresylphosphat, Phosphite, z. B. Triarylphosphite, oder Phosphonite. Als Phosphonite werden in der Regel Bis(2,4-di-tert.-butylphenyl)-phenylphosphonit, Tris(2,4-di-tert.butylphenyl)-phosphonit, Tetrakis(2,4-di-tert.-butyl-6-methylphenyl)-4,4'-biphenylylen-diphosphonit, Tetrakis(2,4-di-tert.-butylphenyl)-4,4'-biphenylylendiphosphonit, Tetrakis(2,4-dimethylphenyl)-1,4-phenylylendiphosphonit, Tetrakis(2,4-di-tert.-butylphenyl)-1,6-hexylylendiphosphonit und/oder Tetrakis(3,5-dimethyl-4-hydroxyphenyl)-4,4'-biphenylylen-diphosphonit bzw. Tetrakis(3,5-di-tert.-butyl-4-hydroxyphenyl)-4,4'-biphenylylen-diphosphonit verwendet.

Des weiteren geeignet sind anorganische Flammschutzmittel auf der Basis von Hydroxiden oder Carbonaten, insbesondere des Magnesiums, anorganische und organische Borverbindungen wie Borsäure, Natriumborat, Boroxid, Natriumtetraphenylborat und Tribenzylborat, stickstoffhaltige Flammschutzmittel wie Iminophosphorane, Melamincyanurat und Ammoniumpolyphosphate sowie Melaminphosphat (s. a. Encyclopedia of Chemical Technology, ibid.). Als Flammschutzmittel kommen weiterhin auch Gemische mit Antitropfmitteln wie Teflon oder hochmolekulares Polystyrol in Frage.

Als Beispiele für faserförmige bzw. pulverförmige Füll- und Verstärkungsstoffe seien Kohlenstoff- oder Glasfasern in Form von Glasgeweben, Glasmatten oder Glasseidenrovings, Schnittglas sowie Glaskugeln genannt, besonders bevorzugt Glasfasern. Die verwendeten Glasfasern können aus E-, A- oder C-Glas sein und sind vorzugsweise mit einer Schlichte, z. B. auf Epoxyharz-, Silan-, Aminosilan- oder Polyurethanbasis und einem Haftvermittler auf der Basis funktionalisierter Silane ausgerüstet. Die Einarbeitung der Glasfasern kann sowohl in Form von Kurzglasfasern als auch in Form von Endlossträngen (Rovings) erfolgen.

Als teilchenförmige Füllstoffe eignen sich z. B. amorphe Kieselsäure, Whisker, Aluminiumoxidfasern, Magnesiumcarbonat (Kreide), gepulverter Quarz, Glimmer, Mica, Bentonite, Talkum, Feldspat oder insbesondere Calciumsilikate wie Wollastonit und Kaolin.

Die faser-, pulver- bzw. teilchenförmigen Füll- und Verstärkungsstoffe werden üblicherweise in Mengen von 1 bis 60 und bevorzugt 10 bis 50 Gew.-%, bezogen auf das Formteil, verwendet.

Beim Verschweißen mittels elektromagnetischer Strahlung sind folgende Ausführungsformen der Erfindung möglich:
- Das Formteil oder die Folie absorbiert elektromagnetische Strahlung im verwendeten Wellenbereich, ohne dass ein Additiv nötig ist, oder
- die Absorption der elektromagnetischen Strahlung wird durch Zusatz eines absorbierenden Additivs bewirkt.

In beiden Fällen ist eines der beiden Teile transparent für die verwendete elektromagnetische Strahlung, während das andere Teil die Strahlung absorbiert. Eingestrahlt wird in jedem Fall durch das für die Strahlung transparente Teil.

Die verwendete Folie kann einschichtig sein; sie besteht in diesem Fall aus einem Material, das mit dem Material des Formteils eine feste Haftung eingeht. Kann mit einer einschichtigen Folie wegen nicht ausreichender Materialverträglichkeit eine feste Haftung nicht erzielt werden, so kann eine zweischichtige Folie verwendet werden, wobei eine Folienschicht auf die Haftung zum Formteil hin optimiert ist. Falls von der Anwendung her erforderlich, kann die Folie darüber hinaus weitere Schichten enthalten. Die Herstellung derartiger Mehrschichtfolien, beispielsweise durch Coextrusion, ist Stand der Technik.

Im allgemeinen ist die Folie maximal 2000 µm, maximal 1600 µm, maximal 1200 µm, maximal 1000 µm, maximal 900 µm, maximal 800 µm, maximal 700 µm oder maximal 600 µm dick, während die Mindestdicke bei 10 µm, 15 µm, 20 µm, 25 µm bzw. 30 µm liegt.

In einer bevorzugten Ausführungsform besteht die Folie bzw. deren nach außen hin gerichtete Schicht aus einer Formmasse auf Basis eines teilkristallinen Polyamids.

Dieses teilkristalline Polyamid unterliegt keiner Einschränkung. In erster Linie kommen hierbei aliphatische Homo- und Copolykondensate in Frage, beispielsweise PA46, PA66, PA88, PA610, PA612, PA810, PA1010, PA1012, PA1212, PA6, PA7, PA8, PA9, PA10, PA 11 und PA 12. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, dass von einer α,ω-Aminocarbonsäure bzw. von dem davon abgeleiteten Lactam ausgegangen worden ist; im übrigen sei verwiesen auf H. Domininghaus, Die Kunststoffe und ihre Eigenschaften, Seiten 272 ff., VDI-Verlag, 1976.)

Sofern Copolyamide verwendet werden, können diese z. B. Adipinsäure, Sebacinsäure, Korksäure, Isophthalsäure, Terephthalsäure, Naphthalin-2.6-dicarbonsäure usw. als Cosäure bzw. Bis(4-aminocyclohexyl)methan, Bis(3-methyl-4-aminocyclohexyl)methan, Trimethylhexamethylendiamin, Hexamethylendiamin oder ähnliches als Codiamin enthalten. Lactame wie Caprolactam oder Laurinlactam bzw. Aminocarbonsäuren wie ω-Aminoundecansäure können als Cokomponente ebenfalls eingebaut sein.

Die Herstellung dieser Polyamide ist bekannt (z. B. D. B. Jacobs, J. Zimmermann, Polymerization Processes, S. 424 - 467, Interscience Publishers, New York, 1977; DE-AS 21 52 194).

Darüber hinaus sind als Polyamide auch gemischte aliphatisch/aromatische Polykondensate geeignet, wie sie z. B. in den US-Patentschriften Nr. 4 163 101, 4 603 166, 4 831 108, 5 112 685, 5 436 294 und 5 447 980 sowie in der EP-A-0 309 095 beschrieben sind. Es handelt sich in der Regel um Polykondensate, deren Monomere aus aromatischen Dicarbonsäuren wie z. B. Terephthalsäure und Isophthalsäure, aliphatischen Dicarbonsäuren wie z. B. Adipinsäure, aliphatischen Diaminen wie z. B. Hexamethylendiamin, Nonamethylendiamin, Dodecamethylendiamin und 2-Methyl-1,5-pentandiamin sowie Lactamen bzw. ω-Aminocarbonsäuren wie z. B. Caprolactam, Laurinlactam und ω-Aminoundecansäure ausgewählt sind. Der Gehalt an aromatischen Monomereinheiten im Polykondensat beträgt in der Regel mindestens 15 %, mindestens 20 %, mindestens 25 %, mindestens 30 %, mindestens 35 %, mindestens 40 %, mindestens 45 % oder etwa 50 %, bezogen auf die Summe aller Monomereinheiten. Derartige Polykondensate werden häufig als "Polyphthalamide" bzw. "PPA" bezeichnet. Weitere geeignete Polyamide sind Poly(etheresteramide) bzw. Poly(etheramide); derartige Produkte werden z. B. in den DE-OSS 25 23 991, 27 12 987 und 30 06 961 beschrieben.

Das teilkristalline Polyamid besitzt eine Schmelzenthalpie von mindestens 8 J/g, bevorzugt von mindestens 10 J/g, besonders bevorzugt von mindestens 12 J/g und insbesondere bevorzugt von mindestens 16 J/g, gemessen mit der DSC-Methode gemäß ISO 11357 beim 2. Aufheizen und Integration des Schmelzpeaks.

Die Polyamidformmasse kann entweder eines dieser Polyamide oder mehrere als Gemisch enthalten. Weiterhin können bis zu 40 Gew.-% andere Thermoplaste enthalten sein, sofern diese die Verbundfähigkeit nicht stören, insbesondere schlagzähmachende Kautschuke wie Ethylen/Propylen- oder Ethylen/Propylen/Dien-Copolymere, Polypentenylen, Polyoctenylen, statistische bzw. blockartig aufgebaute Copolymere aus alkenylaromatischen Verbindungen mit aliphatischen Olefinen oder Dienen (EP-A-0 261 748) oder Kern/Schale-Kautschuke mit einem zähelastischen Kern aus (Meth)Acrylat-, Butadien- oder Styrol/Butadien-Kautschuk mit Glastemperaturen T_{g}< -10 °C, wobei der Kern vernetzt sein kann und die Schale aus Styrol und/oder Methylmethacrylat und/oder weiteren ungesättigten Monomeren aufgebaut sein kann (DE-OSS 21 44 528, 37 28 685).

Der Polyamidformmasse können die für Polyamide üblichen Hilfs- und Zusatzstoffe wie z. B. Flammschutzmittel, Stabilisatoren, UV-Absorber, Weichmacher, Verarbeitungshilfsmittel, Füllstoffe, insbesondere zur Verbesserung der elektrischen Leitfähigkeit, Nanofüllstoffe, Pigmente, Farbstoffe, Nukleierungsmittel oder ähnliches zugefügt werden. Die Menge der genannten Mittel ist so zu dosieren, dass die gewünschten Eigenschaften nicht ernsthaft beeinträchtigt werden. Für die meisten Anwendungen ist erwünscht, dass die Polyamidformmasse bei der verwendeten Schichtdicke ausreichend transparent ist.

In einer bevorzugten Ausführungsform besitzen die Monomereinheiten des Polyamids, die sich von Diamin, Dicarbonsäure bzw. Lactam (oder Aminocarbonsäure) herleiten, im Durchschnitt mindestens 8 C-Atome und besonders bevorzugt mindestens 9 C-Atome.

Im Rahmen der Erfindung besonders geeignete Polyamide sind:
- Das Polyamid aus 1,12-Dodecandisäure und 4,4'-Diaminodicyclohexylmethan (PA PACM12), insbesondere ausgehend von einem 4,4'-Diaminodicyclohexylmethan mit einem trans,trans-Isomerenanteil von 35 bis 65 %;
- PA612, PA1010, PA1012, PA11, PA12, PA1212 sowie Mischungen hieraus;
- Copolyamide, die aus folgender Monomerkombination aufgebaut sind:
   a) 65 bis 99 Mol-%, bevorzugt 75 bis 98 Mol-%, besonders bevorzugt 80 bis 97 Mol-% und insbesondere bevorzugt 85 bis 96 Mol-% eines im wesentlichen äquimolaren Gemisches aus einem aliphatischen unverzweigten Diamin und einer aliphatischen unverzweigten Dicarbonsäure, wobei das Gemisch gegebenenfalls als Salz vorliegt und darüber hinaus Diamin und Dicarbonsäure bei der Berechnung der Zusammensetzung jeweils einzeln gezählt werden, mit der Einschränkung, dass das Gemisch aus Diamin und Dicarbonsäure im Mittel 8 bis 12 C-Atome und bevorzugt 9 bis 11 C-Atome pro Monomer enthält;
   b) 1 bis 35 Mol-%, bevorzugt 2 bis 25 Mol-%, besonders bevorzugt 3 bis 20 Mol-% und insbesondere bevorzugt 4 bis 15 Mol-% eines im wesentlichen äquimolaren Gemisches aus einem cycloaliphatischen Diamin und einer Dicarbonsäure;
- Copolyamide, die aus folgender Monomerkombination aufgebaut sind:
   a) 50 - 100 Gew.-Teile, bevorzugt 60 - 98 Gew.-Teile, besonders bevorzugt 70 - 95 Gew.-Teile und insbesondere bevorzugt 75 - 90 Gew.-Teile Polyamid, das aus folgenden Monomeren herstellbar ist:
      α) 70 - 100 Mol-%, bevorzugt 75 - 99 Mol-%, besonders bevorzugt 80 - 98 Mol-% und insbesondere bevorzugt 85 - 97 Mol-% m- und/oder p-Xylylendiamin und
      β) 0 - 30 Mol-%, bevorzugt 1 - 25 Mol-%, besonders bevorzugt 2 - 20 Mol-% und insbesondere bevorzugt 3 - 15 Mol-% anderer Diamine mit 6 bis 14 C-Atomen,
      wobei sich die Mol-%-Angaben hier auf die Summe an Diamin beziehen, sowie
      γ) 70 - 100 Mol-%, bevorzugt 75 - 99 Mol-%, besonders bevorzugt 80 - 98 Mol-% und insbesondere bevorzugt 85 - 97 Mol-% aliphatischer Dicarbonsäuren mit 10 bis 18 C-Atomen und
      δ) 0 - 30 Mol-%, bevorzugt 1 - 25 Mol-%, besonders bevorzugt 2 - 20 Mol-% und insbesondere bevorzugt 3 - 15 Mol-% anderer Dicarbonsäuren mit 6 bis 9 C-Atomen,
      wobei sich die Mol-%-Angaben hier auf die Summe an Dicarbonsäure beziehen;
   b) 0 - 50 Gew.-Teile, bevorzugt 2 - 40 Gew.-Teile, besonders bevorzugt 5 - 30 Gew.-Teile und insbesondere bevorzugt 10 - 25 Gew.-Teile eines anderen Polyamids, vorzugsweise eines Polyamids mit im Mittel mindestens 8 C-Atomen in den Monomereinheiten,
wobei sich die Gewichtsteile von a) und b) zu 100 addieren.

In einer weiteren bevorzugten Ausführungsform besteht die Folie bzw. deren nach außen hin gerichtete Schicht aus einer Formmasse auf Basis eines Fluorpolymeren, beispielsweise Polyvinylidendifluorid (PVDF), Ethylen/Tetrafluorethylen-Copolymeren (ETFE) oder Terpolymeren auf Basis von Ethylen, Tetrafluorethylen und einem Termonomer, das in der Regel Fluor enthält und in erster Linie zum Absenken des Schmelzpunkts eingebaut wird. Derartige Produkte sind kommerziell erhältlich.

In weiteren bevorzugten Ausführungsformen besteht die Folie bzw. deren nach außen hin gerichtete Schicht aus einer Formmasse auf Basis eines Polyesters oder eines Polyolefins. Geeignete Polyester sind beispielsweise Polyethylenterephthalat, Polypropylenterephthalat, Polybutylenterephthalat, Polyethylen-2.6-naphthalat, Polypropylen-2.6-naphthalat oder Polybutylen-2.6-naphthalat, während als Polyolefin in erster Linie Polyethylen (insbesondere HDPE, LDPE und LLDPE) und Polypropylen (isotaktisch oder syndiotaktisch, Homopolymer als auch Copolymere mit Ethen und/oder 1-Buten, wobei hier Randomcopolymere bevorzugt sind) in Frage kommen.

Bei einer nach innen gerichteten Folienschicht, die als Haftvermittler fungiert, werden Formmassen gewählt, die für die gewählte Materialkombination als geeignet bekannt sind. Häufig eingesetzte Haftvermittler sind beispielsweise Polyolefine, die mit ungesättigen Carbonsäuren oder ungesättigen Säureanhydrigen modifiziert sind. Eine Reihe derartiger Produkte ist unter den Handelsbezeichnungen ADMER^{®} und BYNEL^{®} kommerziell erhältlich.

Andere bekannte Haftvermittler enthalten die Polymeren des Formteils und der nach außen gerichteten Folienschicht sowie gegebenenfalls einen Verträglichkeitsvermittler.

Additive, die elektromagnetische Strahlung absorbieren, sind Stand der Technik. Das absorbierende Additiv kann beispielsweise Ruß sein. Weitere geeignete absorbierende Additive sind Knochenkohle, Graphit, andere Kohlenstoffpartikel, Kupferhydroxidphosphat (KHP), Farbstoffe, Pigmente oder Metallpulver. Gut geeignet sind auch Interferenzpigmente, wie sie z. B. in der EP-A-0 797 511 beschrieben werden; entsprechende Produkte werden unter dem Handelsnamen Iriodin^{®} vertrieben. Ebenfalls gut geeignet sind auch die in der WO 00/20157 und der WO 02/38677 (z. B. ClearWeld^{®}) beschriebenen Additive oder die Additive der Produktreihe Lumogen^{®} IR (BASF AG).

Daneben eignen sich ebenfalls: Glimmer bzw. Glimmerpigmente, Titandioxid, Kaolin, Antimon(III)oxid, Metallpigmente, Pigmente auf der Basis von Bismutoxichlorid (z. B. Serie Biflair von Merck, Hochglanzpigment), Indiumzinnoxid (Nano ITO-Pulver, von Nanogate Technologies GmbH oder AdNano^{tm} ITO der Degussa), AdNano^{tm} Zinkoxid (Degussa), Lanthanhexaborid, Antimonzinnoxid sowie kommerziell erhältliche Flammschutzmittel, welche Melamincyanurat oder Phosphor, bevorzugt Phosphate, Phosphite, Phosphonite oder elementaren (roten) Phosphor, aufweisen.

Wenn eine Störung der Eigenfarbe vermieden werden soll, weist der Absorber bevorzugt Interferenzpigmente, besonders bevorzugt aus der Iriodin LS-Reihe von Merck, oder ClearWeld^{®}, auf.

Der Ruß kann nach dem Furnacerußverfahren, dem Gasrußverfahren oder dem Flammrußverfahren hergestellt werden, vorzugsweise nach dem Furnacerußverfahren. Die Primärteilchengröße liegt zwischen 10 und 100 nm, vorzugsweise zwischen 20 und 60 nm, die Kornverteilung kann eng oder breit sein. Die BET-Oberfläche nach DIN 53601 liegt zwischen 10 und 600 m²/g, bevorzugt zwischen 70 und 400 m²/g. Die Rußpartikel können zur Einstellung von Oberflächenfunktionalitäten oxidativ nachbehandelt sein. Sie können hydrophob (beispielsweise Printex 55 oder Flammruß 101 der Degussa) oder hydrophil (beispielsweise Farbruß FW20 oder Printex 150 T der Degussa) eingestellt sein. Sie können hochstrukturiert oder niederstrukturiert sein; damit wird ein Aggregationsgrad der Primärteilchen beschrieben. Durch die Verwendung spezieller Leitfähigkeitsruße kann die elektrische Leitfähigkeit der aus dem erfindungsgemäßen Pulver hergestellten Bauteile eingestellt werden. Durch die Verwendung von geperlten Rußen kann eine bessere Dispergierbarkeit sowohl bei den nassen als auch bei den trockenen Mischverfahren genutzt werden. Auch die Verwendung von Rußdispersionen kann von Vorteil sein.

Knochenkohle ist ein mineralisches Schwarzpigment, welches elementaren Kohlenstoff enthält. Sie besteht zu 70 bis 90 % aus Calciumphosphat und zu 30 bis 10 % aus Kohlenstoff. Die Dichte liegt typischerweise zwischen 2,3 und 2,8 g/ml.

Der Absorber kann auch eine Mischung von organischen und/oder anorganischen Pigmenten, Flammschutzmitteln oder anderen Farbmitteln enthalten, die jedes für sich in den Wellenlängen zwischen 100 und 3.000 nm nicht oder schlecht absorbieren, in der Kombination jedoch ausreichend gut zur Verwendung im erfindungsgemäßen Verfahren die eingetragene elektromagnetische Energie absorbieren.

Die Konzentration des absorbierenden Additivs in der Formmasse beträgt üblicherweise 0,05 bis 20 Gew.-%, bevorzugt 0,1 bis 5 Gew.-% und besonders bevorzugt 0,2 bis 1,5 Gew.-%.

Das Verschweißen wird entsprechend dem Stand der Technik empfehlenswerterweise unter Anpressdruck durchgeführt.

Die elektromagnetische Strahlung ist hinsichtlich des Frequenzbereichs nicht begrenzt. Es kann sich beispielsweise um Mikrowellenstrahlung, um IR-Strahlung oder bevorzugt um Laserstrahlung handeln.

Die beim erfindungsgemäßen Verfahren eingesetzte Laserstrahlung hat im allgemeinen eine Wellenlänge im Bereich von 150 bis 11.000, vorzugsweise im Bereich von 700 bis 2.000 und besonders bevorzugt im Bereich von 800 bis 1.100 nm.

Prinzipiell sind alle üblichen Laser geeignet, beispielsweise Gaslaser und Festkörperlaser. Gaslaser sind z. B. (in Klammern ist die typische Wellenlänge der emittierten Strahlung angegeben): CO₂-Laser (10600 nm), Argon-Gaslaser (488 nm und 514,5 nm), Helium-Neon-Gaslaser (543 nm, 632,8 nm, 1150 nm), Krypton-Gaslaser (330 bis 360 nm, 420 bis 800 nm), Wasserstoff-Gaslaser (2600 bis 3000 nm), Stickstoff-Gaslaser (337 nm); Festkörperlaser sind z. B. (in Klammern die typische Wellenlänge der emittierten Strahlung): Nd:YAG-Laser(Nd³⁺:Y₃Al₅O₁₂) (1064 nm), Hochleistungsdioden-Laser (800 bis 1000 nm), Rubinlaser (694 nm), F₂-Excimerlaser (157 nm), ArF-Excimerlaser (193 nm), KrCl-Excimerlaser (222 nm), KrF-Excimerlaser (248 nm), XeCl-Excimerlaser (308 nm), XeF-Excimerlaser (351 nm) sowie frequenzvervielfachte Nd:YAG-Laser mit Wellenlängen von 532 nm (frequenzverdoppelt), 355 nm (frequenzverdreifacht) oder 266 nm (frequenzvervierfacht).

Die verwendeten Laser werden üblicherweise bei Leistungen von 1 bis 200, bevorzugt 5 bis 100 und insbesondere 10 bis 50 Watt betrieben.

Die Energiedichten der eingesetzten Laser werden in der Literatur als sogenannte "Streckenenergien" angegeben und liegen bei der vorliegenden Erfindung im allgemeinen im Bereich von 0,1 bis 50 J/mm. Die tatsächliche Energiedichte ist definiert als eingebrachte Leistung/erzeugte Schweißfläche. Dieser Wert ist dem Verhältnis Streckenenergie/Breite der erzeugten Schweißnaht gleichzusetzen. Die tatsächlichen Energiedichten der verwendeten Laser betragen üblicherweise 0,01 bis 25 J/mm². Die zu wählende Energiedichte hängt neben den Reflektionseigenschaften des transparenten Körpers u. a. davon ab, ob die zu verbindenden Kunststoffformteile Füll- oder Verstärkungsstoffe oder andere stark laserabsorbierende oder - streuende Stoffe enthalten. Für Polymere, die eine geringe Reflektion besitzen und keine Füll- oder Verstärkungsstoffe enthalten, betragen die Energiedichten üblicherweise 1 bis 20, insbesondere 3 bis 10 J/mm. Für Polymere, die Füll- oder Verstärkungsstoffe enthalten, betragen sie üblicherweise 3 bis 50, insbesondere 5 bis 20 J/mm.

Entsprechende Laser, die im erfindungsgemäßen Verfahren eingesetzt werden können, sind kommerziell erhältlich.

Besonders bevorzugte Laser emittieren im kurzwelligen Infrarot-Bereich. Solche besonders bevorzugten Laser sind Festkörperlaser, insbesondere der Nd:YAG-Laser (1064 nm) und Hochleistungsdioden-Laser (800 bis 1.000 nm).

Wenn das Formteil die verwendete elektromagnetische Strahlung absorbiert, wird durch die Folie hindurch eingestrahlt. Die Folie ist in diesem Fall für die Strahlung ausreichend transparent.

Es kann aber auch ein für die Strahlung transparentes Formteil sowie eine absorbierende einschichtige Folie eingesetzt werden; in diesem Fall wird durch das Formteil hindurch eingestrahlt.

In einer weiteren Ausführungsform setzt man eine mehrschichtige Folie ein, deren nach innen gerichtete Schicht (d. h. zum Formteil hin) absorbierend ist. In diesem Fall kann durch die Folie hindurch eingestrahlt werden. Falls das Formteil ausreichend transparent ist, kann jedoch auch durch das Formteil hindurch eingestrahlt werden.

Bei einer transparenten Folie bzw. Deckschicht ist von Vorteil, dass die Folie oder Deckschicht nicht mit aufschmilzt. Daher erzielt das Andrücken keine Markierungen auf der Oberfläche. Hierbei ist es günstig, die Schmelz- bzw. Erweichungsbereiche der Deckschicht bzw. Folie (bei einschichtiger Ausführung), eventueller Haftvermittlerschicht und des Formteils aufeinander abzustimmen. Bevorzugt liegt der Schmelz- bzw. Erweichungsbereich des Haftvermittlers tiefer als derjenige der Deckschicht. Bei einer einschichtigen Folie ist es bevorzugt, dass der Schmelz- bzw. Erweichungsbereich des Formteilmaterials tiefer liegt.

Die Folie (bei einschichtiger Ausführung) bzw. die Deckschicht (d. h. die nach außen weisende Schicht einer Mehrschichtfolie) kann die unterschiedlichsten Anforderungen erfüllen. Sie kann eine Schutzfunktion besitzen mit einer guten Kratzfestigkeit, UV-, Temperatur- oder Chemikalienbeständigkeit oder, sofern sie ausreichend transparent ist, auf der Rückseite bedruckt sein, was zur Folge hat, dass die Bedruckung nicht entfernt oder abgekratzt werden kann. Beispielsweise können mit dem erfindungsgemäßen Verfahren Polyolefinoberflächen, z. B. Flaschen, ohne Vorbehandlung mit Folien, z. B. in Form von Etiketten, versehen werden. Das Applizieren von Emblemen oder von Schutzfolien ist ebenso möglich wie die Oberflächendekoration oder die Beschriftung bzw. Kennzeichnung von sicherheitsrelevanten Bauteilen, oder das Aufbringen von Ursprungsnachweisen, Gewährleistungs- oder Sicherheitshinweisen. Auch kleinere Stückzahlen sind mit Hilfe dieser Technik einfach und zuverlässig herstellbar.

Beim Verschweißen kann die Folie mit einer Kugel oder einer Rolle angedrückt werden. Der Strahl kann durch eine ausreichend transparente Andruckrolle geführt werden. Alternativ hierzu kann der Strahl auch kurz dahinter oder zwischen zwei Rollen eingeleitet werden. Die Folie kann auch mittels Vakuum an das Formteil angesaugt werden oder mit einer Kombination von Andruckrolle und Vakuum gefügt werden.

In einer besonders geeigneten Ausführungsform wird der Laserstrahl über eine drehbare Glaskugellinse fokussiert, die gleichzeitig als mechanisches Anpresswerkzeug dient. Mit dieser Verfahrensvariante können auch komplexe Bauteile mit dreidimensionaler Fügenaht geschweißt werden. Dabei leitet eine luftgelagerte, drehbare Glaskugellinse die Anpresskraft an der Fügestelle ein. Der Andrückpunkt befindet sich ständig auf der Achse des optischen Systems, so dass die Laserstrahlung nur dort auftrifft, wo die Anpresskraft vorhanden ist. Dies garantiert auch bei komplexen dreidimensionalen Geometrien eine hohe Schweißqualität.

## Patentansprüche

1. Verfahren zur Herstellung eines oberflächendekorierten Formteils, wobei
a) ein Formteil bereitgestellt wird und
b) mindestens eine Portion der Formteiloberfläche mit einer dekorierenden Folie unter Einstrahlung von elektromagnetischer Strahlung verschweißt wird.

2. Verfahren gemäß Anspruch 1,
**dadurch gekennzeichnet,**
**dass** das Formteil durch ein schichtweise arbeitendes werkzeugloses Verfahren hergestellt wird.

3. Verfahren gemäß Anspruch 1,
**dadurch gekennzeichnet,**
**dass** das Formteil 1 bis 60 Gew.-% Füll- und/oder Verstärkungsstoffe enthält.

4. Verfahren gemäß einem der vorhergehenden Ansprüche,
**dadurch gekennzeichnet,**
**dass** die Folie ein- oder mehrschichtig ist.

5. Verfahren gemäß einem der vorhergehenden Ansprüche,
**dadurch gekennzeichnet,**
**dass** die Folie bzw. die nach außen hin gerichtete Schicht der Folie aus einer Formmasse auf Basis von teilkristallinem Polyamid, Fluorpolymer, Polyester oder Polyolefin besteht.

6. Verfahren gemäß einem der vorhergehenden Ansprüche,
**dadurch gekennzeichnet,**
**dass** es sich bei der elektromagnetischen Strahlung um Laserstrahlung handelt.
